# EUROPEAN PATENT SPECIFICATION

(11) **EP 4 176 728 B1**
(45) Date of publication and mention of the grant of the patent: **20.11.2024**
(21) Application number: 21832760.9
(22) Date of filing: 18.06.2021
(51) Int. Cl.: A23G 1/54

(54) **CHOCOLATE**
SCHOKOLADE
CHOCOLAT

(30) Priority: 01.07.2020 JP 2020114393
(43) Date of publication of application: 10.05.2023
(73) Proprietor: Lotte Co., Ltd., Tokyo 160-0023 (JP)
(72) Inventor: SAITO, Keisuke, Saitama-shi, Saitama 336-0027 (JP); OSADA, Yuuki, Saitama-shi, Saitama 336-0027 (JP); WATANABE, Shingo, Sayama-shi, Saitama 350-1331 (JP)
(74) Representative: Wächtershäuser & Hartz Patentanwaltspartnerschaft mbB
(86) International application number: PCT/JP2021/023221
(87) International publication number: WO 2022/004433

(56) References cited:
- JP-A- 2011 177 087
- JP-A- 2012 239 383
- JP-A- 2014 147 299
- JP-A- 2018 007 624
- JP-A- H0 458 850
- US-A1- 2014 363 539
- SASAKI KATSUMI: "Melt in the mouth chocolate technology and preferences for delicious taste", FOOD CHEMICALS : A TECHNICAL JOURNAL ON FOOD CHEMISTRY AND CHEMICALS, vol. 22, no. 9, 31 August 2006 (2006-08-31), JP , pages 67 - 70, XP009541130, ISSN: 0911-2286

## Description

### TECHNICAL FIELD

The present invention relates to a chocolate having a fluid center enclosed therein.

### BACKGROUND ART

A chocolate having a water-containing filling enclosed therein as a center, as exemplified by a chocolate confectionery filled with western liquor, has long been familiar to consumers because of its freshness, smooth melting in mouth, good flavor and the like.

However, when a chocolate having a water-containing filling enclosed therein as a center is placed under a high temperature environment, for example, during the distribution process, the shape of the chocolate may change significantly due to low shape retention property of the water-containing filling. In addition, since a water-containing filling containing more ethanol has lower shape retention property against heat, it has been known that a chocolate having a water-containing filling containing more ethanol enclosed therein is more likely to change its shape during the distribution process.

To solve such a problem, Patent Literature 1 describes a ganache -like composition which contains 40 wt% to 70 wt% of a monosaccharide and/or a disaccharide containing 5 wt% to 25 wt% of a linear polyvalent alcohol, 5 wt% to 25 wt% of hard butter and 8 wt% to 18 wt% of water, and has a water activity of less than 0.600. It is described that when the ganache -like composition described in Patent Literature 1 is made into a chocolate having a center in which the ganache -like composition is coated with a chocolate composition, the change in the shape, such as a depression of a chocolate composition does not occur.

### CITATION LIST

### Patent Literature

PTL 1: JP-A-2011-177087

### SUMMARY OF THE INVENTION

### Technical Problem

However, there was a problem with a chocolate having a water-containing filling having fluidity as a center enclosed therein and a chocolate having a water-containing filling having fluidity with more ethanol added enclosed therein. That is, the shapes of them change in the distribution process.

The present invention has been made in view of these circumstances, and it is an object of the present invention to provide a chocolate having a fluid center enclosed therein that has high shape retention property against heat and is unlikely to change its shape during the distribution process.

### Solution to Problem

As a result of the extensive study, the inventors of the present invention found that a chocolate having a fluid center enclosed therein has high shape retention property against heat, by having the fluid center containing sorbitol and glycerin within a range satisfying a specific ratio.

That is, according to one aspect of the present invention, a chocolate having a fluid center enclosed therein can be provided, in which a water content of the center is 15 wt% or more and 20 wt% or less, the center contains 30 wt% or more and 40 wt% or less of sorbitol and glycerin in total, and the ratio of the sorbitol to the glycerin is 4:1 to 1:4 on a weight basis.

### Advantageous Effects of Invention

According to the present invention, it is possible to provide a chocolate having a fluid center enclosed therein that hardly changes its shape even when placed under a high temperature of 28°C and has high shape retention property against heat.

### DESCRIPTION OF THE EMBODIMENTS

A chocolate of the present invention is a chocolate having a fluid center enclosed therein in which a water content of the center is 15 wt% or more and 20 wt% or less, the center contains 30 wt% or more and 40 wt% or less of sorbitol and glycerin in total, and the ratio of the sorbitol to the glycerin is 4:1 to 1:4 on a weight basis.

The center of the chocolate of the present invention contains at least a saccharide, an oil and fat, water, and sugar alcohols including sorbitol and glycerin.

The center has fluidity by containing glycerin. Furthermore, since the center contains sorbitol in addition to glycerin, the chocolate having the center enclosed therein can have high shape retention property against heat. When the ratio of sorbitol to glycerin in the center is 4:1 to 1:4, the chocolate can have high shape retention property against heat. In addition, the total content of sorbitol and glycerin in the center is 30 wt% or more and 40 wt% or less. Outside this range, the condition becomes unfavorable in terms of desired fluidity, taste, and production suitability.

The center may contain a sugar alcohol in addition to sorbitol and glycerin. Examples of the sugar alcohol include isomaltitol, erythritol, xylitol, maltitol, maltotetraitol, maltotriitol, mannitol, lactitol, reduced palatinose, reduced isomaltooligosaccharides, reduced xylooligosaccharides, reduced gentiooligosaccharides, reduced malt sugar starch syrup and reduced starch syrup.

Examples of the saccharide contained in the center include a monosaccharide such as glucose, galactose, fructose, arabinose, xylose, fucose, sorbose, rhamnose, ribose, isomerized liquid sugar and N-acetyl glucosamine; a disaccharide such as sugar (sucrose), lactose, maltose, lactulose, trehalose, isotrehalose, neotrehalose, trehalulose, palatinose (isomaltulose) and melibiose; an oligosaccharide such as α-cyclodextrin, β-cyclodextrin, an isomaltooligosaccharide (isomaltose, isomaltotriose, panose and the like), oligo-N-acetylglucosamine, galactosyl sucrose, galactosyl lactose, galactopyranosyl (β1-3) galactopyranosyl (β1-4) glucopyranose, galactopyranosyl (β1-3) glucopyranose, galactopyranosyl (β1-6) galactopyranosyl (β1-4) glucopyranose, galactopyranosyl (β1-6) glucopyranose, a xylooligosaccharide (xylotriose, xylobiose and the like), a gentiooligosaccharide (gentiobiose, gentiotriose, gentiotetraose and the like), stachyose, theande oligo, a nigerooligosaccharide (nigerose and the like), a palatinose oligosaccharide, palatinose syrup, a fructooligosaccharide (kestose, nystose and the like), fructofuranosyl nystose, polydextrose, maltosyl-β-cyclodextrin, a maltooligosaccharide (maltotriose, tetraose, pentaose, hexaose, heptaose and the like), raffinose, sugar coupled starch syrup (coupling sugar), a soybean oligosaccharide, an invert sugar and starch syrup.

The content of the sugar alcohol excluding sorbitol and glycerin and the saccharide in the center is 30 wt% or less, and preferably 20 wt% or more and 30 wt% or less.

Examples of the oil and fat contained in the center include a vegetable oil and fat, a hardened oil of a vegetable oil and fat, and an animal oil and fat. As a vegetable oil and fat, not only a vegetable oil and fat that is solid at room temperature such as cocoa butter, peanut butter and palm oil, but also a hardened oil of a vegetable oil and fat such as margarine and shortening and a vegetable oil and fat that is liquid at room temperature such as corn oil, soybean oil, sesame oil, rapeseed oil, rice oil, camellia oil, safflower oil, coconut oil (palm kernel oil), cottonseed oil, sunflower oil, perilla oil, linseed oil, olive oil, peanut oil, almond oil and grapeseed oil can be used. As an animal oil and fat, lard, beef fat and milk fat can be used. By using a raw material derived from cacao as an oil and fat, the center can be a water-containing chocolate.

These oils and fats may be used alone or in combination, but a vegetable oil and fat that is liquid at room temperature is preferably mixed with another oil and fat that is solid at room temperature and used so that the mixture is solid at room temperature. In addition, the oil and fat contained in the center may be one selected from vegetable oils and fats or animal oils and fats or the mixture thereof.

The oil and fat content in the center is preferably 10 wt% or more and 20 wt% or less. Outside this range, the following problems arise. When the oil and fat content is less than 10 wt%, the oil-in-water type emulsified state becomes unstable and the oil phase and the water phase are separated. In addition, when the oil and fat content is more than 20 wt% and the oil and fat that is solid at room temperature constitutes a large proportion, fluidity becomes poor. On the other hand, when the oil and fat content is more than 20 wt% and the oil and fat that is liquid at room temperature constitutes a large proportion, fluidity can be retained but the shape of the chocolate changes greatly and the shape retention property of the chocolate of the present invention deteriorates.

The water content in the center is preferably 15 wt% or more and 20 wt% or less. When the water content is less than 15 wt%, sorbitol may precipitate and the texture may deteriorate. In addition, when the water content is more than 20 wt%, the water phase and the oil phase contained in the center are separated, which is a problem. Moreover, when the water activity of the center is less than 0.63, the chocolate of the present invention can have high shape retention property, which is preferred. The water activity of the center is preferably 0.5 or more, and there is no need to set a desired lower limit.

The center may contain ethanol, liquor, fruit juice, milk, fresh cream and the like so that the water content in the center becomes within the above range. When the center contains ethanol and liquor, the ethanol content in the center is preferably 0.5 wt% or more and 9 wt% or less. When the ethanol content is less than 0.5 wt%, the flavor of ethanol may not be felt, and when it is more than 9 wt%, the shape retention property of the chocolate of this invention may deteriorate. Examples of the liquor include whiskey, brandy, gin, vodka, rum, sake, shochu, liqueur, various fruit liquors, wine, medicinal liquor and other liquors.

In addition to the above ingredients, the center may also contain a high-intensity sweetener to adjust sweetness, an acidulant, an emulsifier, whole milk powder, skim milk powder, whey powder, a flavoring agent, a pigment and the like.

Examples of the high-intensity sweetener include α-glucosyltransferase-treated stevia, aspartame, acesulfame potassium, alitame, licorice extract (glycyrrhizin), triammonium glycyrrhizinate, tripotassium glycyrrhizinate, trisodium glycyrrhizinate, diammonium glycyrrhizinate, dipotassium glycyrrhizinate, disodium glycyrrhizinate, curculin, saccharin, saccharin sodium, cyclamate, sucralose, stevia extract, stevia powder, dulcin, thaumatin, tenryocha extract, Nigeria berry extract, neotame, neohesperidin dihydrochalcone, fructosyl transferase-treated stevia, Brazilian licorice extract, miracle fruit extract, siraitia grosvenorii extract, enzyme-treated licorice and enzyme-degraded licorice and the mixture thereof. In the chocolate of the present invention, the content of the high-intensity sweetener is preferably 0.1 wt% or less.

Examples of the flavoring agent include a milk flavoring agent, a vanilla flavoring agent, a fruit flavoring agent, a matcha flavoring agent, a coffee flavoring agent, a black tea flavoring agent, a mint flavoring agent, various flavor essences, and other flavoring agents. Any of these flavoring agents can be used regardless of whether it is a natural product, a natural-derived extract, a non-natural product, a synthetic product or the like, and multiple flavoring agents can be mixed as needed and used.

Examples of the acidulant include various acidulants such as citric acid, malic acid, fumaric acid, ascorbic acid, acetic acid and tartaric acid. Examples of the emulsifier include lecithin, a sucrose fatty acid ester, a glycerin fatty acid ester, a sorbitan fatty acid ester, and the mixture thereof.

Any pigment can be used regardless of whether it is a natural pigment or a synthetic pigment. Examples of the pigment include a caramel pigment, a gardenia pigment, an anthocyanin pigment, an annatto pigment, a paprika pigment, a safflower pigment, a monascus pigment, a flavonoid pigment, a cochineal pigment, amaranth (red No. 2), erythrosine (red No. 3), allura red AC (red No. 40), new coccin (red No. 102), phloxine (red No. 104), rose bengal (red No. 105), acid red (red No. 106), tartrazine (yellow No. 4), sunset yellow FCF (yellow No. 5), fast green FCF (green No. 3), brilliant blue FCF (blue No. 1), indigo carmine (blue No. 2), and the mixture thereof.

As the chocolate having a center enclosed therein, i.e., the chocolate that coats the center (hereafter, it is also called a "coating chocolate"), the chocolate composition that is usually used can be used.

The chocolate composition used as the coating chocolate contains a saccharide such as sugar and lactose, cocoa mass, whole milk powder, skim milk powder, whey powder, cocoa butter, a vegetable oil and fat, an emulsifier such as lecithin and a flavoring agent. The chocolate composition contains 10 wt% to 50 wt% of sugar, 0 wt% to 70 wt% of cocoa mass, 0 wt% to 40 wt% of whole milk powder and/or skim milk powder. Those blending amounts may be appropriately changed within a range in which 30 wt% to 60 wt% of a fatty ingredient is contained in the chocolate composition. The type of the coating chocolate may be a chocolate that requires a tempering operation or a chocolate that does not require a tempering operation, provided that the chocolate used as the coating chocolate is solid at room temperature.

### (Production Method)

One aspect of the production method of the chocolate of the present invention is shown below.

An example of the production method of the center of the chocolate of the present invention is shown below.

Sorbitol, glycerin, fruit juice, liquor, ethanol, an acidulant, a flavoring agent, a pigment, water and the like are mixed to prepare a liquid syrup, to which a mixture of a saccharide, an oil and fat, whole milk powder, skim milk powder and whey powder is added, and mixed with a blender to provide the center. The oil and fat may be tempered as needed and an emulsifier may be added when mixing with a blender.

After tempering the chocolate composition, the part which will be the shell of the coating chocolate is formed by pouring the chocolate composition into a mold or the like. Then the center produced above is placed in the shell. Furthermore, after tempering the chocolate composition, the part which will be the bottom of the coating chocolate is poured on the center placed in the shell to seal the center in the coating chocolate. Then, the chocolate is cooled and removed from the mold to obtain the chocolate of the present invention.

### (Fluidity of Center)

Regarding the chocolate of the present invention, the fluidity of the center is measured as follows.

In a cup, 50 g of the center is weighed, cooled at 17°C for 30 minutes, and then tempered at 25°C for 30 minutes to provide a sample of the center. After 4 g of the sample of the center is placed on high-quality PPC paper (manufactured by NP Trading Co.,Ltd.) under an atmosphere of 25°C, the high-quality PPC paper is allowed to stand still in the state of inclined at an angle of 20°, and the moving distance (spreading distance) of the sample of the center after 5 minutes is measured. In the present invention, it is assessed that the center has fluidity when this moving distance is 10 mm or more.

### (Water Activity of Center)

Water activity is an indicator of the ratio of free water contained in a food and the like. Regarding the chocolate of the present invention, the water activity of the center can be measured using a commercially available water activity measuring device. As the water activity measuring device, for example, AW-Therm, HygroLab (both manufactured by Rotronic Corporation) or the like can be used.

### [Examples]

Examples and Comparative Examples are described below, but the present invention is not limited to these.

### (Example 1)

After cocoa mass, whole milk powder, cocoa butter, a vegetable oil and fat, and a saccharide were mixed according to the blending amounts in the table 1, atomized and refined, lecithin and a flavoring agent were added to produce a chocolate composition. This chocolate composition was tempered, and then filled into the mold. This was cooled to produce a shell.

### Table 1

**Table 1**

| Material | Wt% |
|---|---|
| Cocoa mass | 13 |
| Whole milk powder | 15 |
| Cocoa butter | 12 |
| Vegetable oil and fat | 15 |
| Saccharide | 44 |
| Lecithin | 0. 26 |
| Flavoring agent | 0. 09 |
| Total | 100 |

Sorbitol, glycerin, fruit juice, liquor, alcohol (93 wt% ethanol), an acidulant, a flavoring agent and a pigment, which are water-soluble materials and water were mixed to prepare a liquid syrup. A mixture including a saccharide, a vegetable oil and fat, whole milk powder and lecithin was added to the liquid syrup and mixed with a blender to obtain the center. The resulting mixture was placed in the shell produced above. The blending amounts of the materials are shown in Table 2.

The water activity of the center produced above was measured using a water activity measuring device (the product name: HygroLab, manufactured by Rotronic Corporation). The water activity was measured by placing 10 g of the center part in a dedicated petri dish of the water activity measuring device and allowing it to stand still at 25°C for 60 minutes. The results are shown in Table 2.

**Table 2**

| Table 2 | | | | | | | | | | | | |
|---|---|---|---|---|---|---|---|---|---|---|---|---|
| Material | Comparative Example 1 | Example 1 | Example 2 | Example 3 | Example 4 | Comparative Example 2 | Example 5 | Comparative Example 3 | Comparative Example 4 | Example 6 | Comparative Example 5 | Comparative Example 6 |
| Saccharide (wt%) | 26.1 | 26.1 | 26.1 | 26.1 | 26.1 | 26.1 | 26. 1 | 26.1 | 20.0 | 26.1 | 26.1 | 20.0 |
| Vegetable oil and fat (wt%) | 16 | 16 | 16 | 16 | 16 | 16 | 16 | 16 | 12 | 16 | 16 | 12 |
| Whole milk powder (wt%) | 1.8 | 1.8 | 1.8 | 1.8 | 1.8 | 1.8 | 1.8 | 1.8 | 1.3 | 1.8 | 1.8 | 1.3 |
| Lecithin (wt%) | 0.1 | 0.1 | 0.1 | 0.1 | 0.1 | 0.1 | 0.1 | 0.1 | 0.1 | 0.1 | 0.1 | 0.1 |
| Flavoring agent (wt%) | 0.8 | 0.8 | 0.8 | 0.8 | 0.8 | 0.8 | 0.8 | 0.8 | 0.9 | 0.8 | 0.8 | 0.9 |
| Fruit juice (wt%) | 6.5 | 6.5 | 6.5 | 6.5 | 6.5 | 6.5 | 6.5 | 6.5 | 7. 7 | 6.5 | 6.5 | 7.7 |
| Liqueur (wt%) | 2.4 | 2.4 | 2.4 | 2.4 | 2.4 | 2.4 | 2.4 | 2.4 | 2.9 | 2.4 | 2.4 | 2.9 |
| Pigment (wt%) | 0.1 | 0.1 | 0.1 | 0.1 | 0.1 | 0.1 | 0.1 | 0.1 | 0.1 | 0.1 | 0.1 | 0.1 |
| Acidulant (wt%) | 0.3 | 0.3 | 0.3 | 0.3 | 0.3 | 0.3 | 0.3 | 0.3 | 0.4 | 0.3 | 0.3 | 0.4 |
| Alcohol (wt%) | 8.7 | 8.7 | 8.7 | 8.7 | 8.7 | 8.7 | 4.4 | 0.0 | 0.0 | 4.4 | 0.0 | 0.0 |
| Sorbitol (wt%) | 30 | 24 | 18 | 12 | 6.0 | 0.0 | 24 | 24 | 29 | 6.0 | 6.0 | 7. 0 |
| Glycerin (wt%) | 0.0 | 60 | 12 | 18 | 24 | 30 | 6.0 | 6.0 | 7. 0 | 24 | 24 | 29 |
| Water (wt%) | 7. 0 | 7. 0 | 7. 0 | 7. 0 | 7. 0 | 7. 0 | 11 | 16 | 19 | 11 | 16 | 19 |
| Total (wt%) | 100 | 100 | 100 | 100 | 100 | 100 | 100 | 100 | 100 | 100 | 100 | 100 |
| Water content (wt%) | 15 | 15 | 15 | 15 | 15 | 15 | 19 | 23 | 27 | 19 | 23 | 27 |
| Ethanol content (wt%) | 8.6 | 8.6 | 8.6 | 8.6 | 8.6 | 8.6 | 4.5 | 0. 45 | 0.54 | 4.5 | 0.45 | 0.54 |
| Water activity | 0.60 | 0. 59 | 0. 56 | 0. 55 | 0. 54 | 0.52 | 0.62 | 0.70 | 0.71 | 0. 58 | 0. 65 | 0.67 |

After cocoa mass, whole milk powder, cocoa butter, a vegetable oil and fat, and a saccharide were mixed according to the blending amounts shown in the table 1, atomized and refined, lecithin and a flavoring agent were added to produce a chocolate composition. This chocolate composition was poured on the shell with the center to form the bottom, which was removed from the mold to produce the chocolate of Example 1 having the center enclosed therein.

### (Example 2 to Example 6 and Comparative Example 1 to Comparative Example 6)

Chocolates of Example 2 to Example 6 and Comparative Example 1 to Comparative Example 6 were produced in the same manner as Example 1, except that the blending amounts of the materials were changed to those listed in Table 2. In Examples 1 to 6, all of the water activities of the centers fell within the range which was more than 0.52 and less than 0.63. Except for Example 5, all of the water activities of the centers fell within the range which was more than 0.52 and less than 0.60.

### (Evaluation)

Six chocolates each from Example 1 to Example 6 and Comparative Example 1 to Comparative Example 6 were allowed to stand still in the incubator of 28°C for 4 weeks for heat-resistance test. The evaluation was carried out according to the following criteria for shape retention property of the shell, shape retention property of the bottom, and overall evaluation of shape retention property. The results are shown in Table 3. In Table 3, "surface" indicates shape retention property of the shell, "back" indicates shape retention property of the bottom, "shape" indicates overall evaluation of shape retention property, and "center" indicates the stability of the center.

### <Shape Retention Property of Shell>

5: No change
4: The top disappearing and the shape becoming flat
3: Part of the top surface dented
2: Whole of the top surface dented
1: Penetrated

### <Shape Retention Property of Bottom>

5: No change
4: Slightly dented
3: Dented
2: Whole of the bottom largely dented
1: Penetrated

### <Overall Evaluation of Shape Retention Property>

A: The total points of shape retention property of the shell and shape retention property of the bottom of each chocolate being 48 or more.
B: The total points of shape retention property of the shell and shape retention property of the bottom of each chocolate being 36 or more and 47 or less.
C: The total points of shape retention property of the shell and shape retention property of the bottom of each chocolate being 35 or less.

### Table 3

**Table 3**

| | Comparative Example 1 | Example 1 | Example 2 | Example 3 | Example 4 | Comparative Example 2 | Example 5 | Comparative Example 3 | Comparative Example 4 | Example 6 | Comparative Example 5 | Comparative Example 6 |
|---|---|---|---|---|---|---|---|---|---|---|---|---|
| Surface | 3 | 5 | 5 | 5 | 5 | 3 | 5 | 5 | 5 | 5 | 5 | 5 |
| | 3 | 5 | 5 | 5 | 5 | 3 | 5 | 5 | 5 | 5 | 5 | 5 |
| | 4 | 5 | 5 | 5 | 5 | 4 | 5 | 5 | 5 | 5 | 5 | 5 |
| | 4 | 5 | 5 | 5 | 5 | 4 | 5 | 5 | 5 | 5 | 5 | 5 |
| | 4 | 5 | 5 | 5 | 5 | 4 | 5 | 5 | 5 | 5 | 5 | 5 |
| | 4 | 5 | 5 | 5 | 5 | 4 | 5 | 5 | 5 | 5 | 5 | 5 |
| Back | 3 | 5 | 5 | 5 | 5 | 3 | 5 | 5 | 4 | 5 | 5 | 5 |
| | 3 | 5 | 5 | 5 | 5 | 3 | 5 | 5 | 4 | 5 | 5 | 5 |
| | 3 | 5 | 5 | 5 | 5 | 3 | 5 | 5 | 4 | 5 | 5 | 5 |
| | 3 | 5 | 5 | 5 | 5 | 3 | 5 | 5 | 4 | 5 | 5 | 5 |
| | 3 | 5 | 5 | 5 | 5 | 3 | 5 | 5 | 4 | 5 | 5 | 5 |
| | 3 | 5 | 5 | 5 | 5 | 3 | 5 | 5 | 4 | 5 | 5 | 5 |
| Total points | 40 | 60 | 60 | 60 | 60 | 40 | 60 | 60 | 54 | 60 | 60 | 60 |
| Shape | B | A | A | A | A | B | A | A | A | A | A | A |
| Center | A | A | A | A | A | A | A | B | C | A | C | C |

In the overall evaluation of shape retention property, Examples 1 to 6 and Comparative Examples 3 to 6 receiving "A" evaluations could be concluded to have no problem with shape retention property. On the other hand, Comparative Examples 1 and 2 receiving "B" evaluations could be concluded to have a slight problem with shape retention property. There were no Example or Comparative Example receiving an "C" evaluation.

In addition, the stability of the center was evaluated according to the following criteria. The results are shown in Table 3.

### <Stability of Center>

A: No change in condition
B: Oil phase and water phase slightly separated
C: Oil phase and water phase clearly separated

In the evaluation of the stability of the center, Comparative Example 3 receiving an "B" evaluation and Comparative Examples 4 to 6 receiving "C" evaluations were concluded to have problems as products.

### (Example 7)

The center was manufactured in the same manner as in Example 1 with the materials and the blending amounts described in Example 1 in Table 2. After 50 g of this center was weighed in a cup, cooled at 17°C for 30 minutes, the center was tempered at 25°C for 30 minutes to prepare a sample of the center. When 4 g of the sample of the center was placed on high-quality PPC paper (manufactured by NP Trading Co.,Ltd.) under an atmosphere of 25°C and the high-quality PPC paper was allowed to stand still in the state of inclined at an angle of 20° for 5 minutes, the moving distance of the sample of the center was measured to be 23.0 mm. For this reason, it can be said that the center of the chocolate of Example 1 has fluidity.

### (Example 8, Comparative Example 7 and Comparative Example 8)

The centers of Example 4, Comparative Example 1 and Comparative Example 2 were manufactured and the moving distances of the centers were measured in the same manner as in Example 7 to prepare Example 8, Comparative Example 7 and Comparative Example 8 as described in Table 4. The moving distances in Examples are shown in Table 4.

### Table 4

**Table 4**

| | Center | Moving distance |
|---|---|---|
| Example 7 | Example 1 | 23.0 mm |
| Example 8 | Example 4 | 27.0 mm |
| Comparative Example 7 | Comparative Example 1 | 6. 5 mm |
| Comparative Example 8 | Comparative Example 2 | 32.0 mm |

From the above, according to the present invention, it is possible to provide a chocolate having a fluid center enclosed therein which is unlikely to change its shape during the distribution process because of its high shape retention property against heat.

## Claims

1. A chocolate having a fluid center enclosed therein, wherein a water content of the center is 15 wt% or more and 20 wt% or less,
wherein the center contains 30 wt% or more and 40 wt% or less of sorbitol and glycerin in total, and
wherein the ratio of the sorbitol to the glycerin is 4:1 to 1:4 on a weight basis.

2. The chocolate according to claim 1, wherein the center contains 0.5 wt% or more and 9 wt% or less of ethanol.

3. The chocolate according to claim 1 or 2, wherein the center is a water-containing chocolate.

4. The chocolate according to any one of claims 1 to 3, wherein the water activity of the center is less than 0.63.

## Patentansprüche

1. Schokolade mit einem darin eingeschlossenen flüssigen Kern, wobei der Wassergehalt des Kerns 15 Gew.-% oder mehr und 20 Gew.-% oder weniger beträgt,
wobei der Kern insgesamt 30 Gew.-% oder mehr und 40 Gew.-% oder weniger Sorbitol und Glycerin enthält, und
wobei das Verhältnis von Sorbitol zu Glycerin auf Gewichtsbasis 4:1 bis 1:4 beträgt.

2. Die Schokolade gemäß Anspruch 1, wobei der Kern 0,5 Gew.-% oder mehr und 9 Gew.-% oder weniger Ethanol enthält.

3. Die Schokolade gemäß Anspruch 1 oder 2, wobei der Kern eine wasserhaltige Schokolade ist.

4. Die Schokolade gemäß einem der Ansprüche 1 bis 3, wobei die Wasseraktivität des Kerns weniger als 0,63 beträgt.

## Revendications

1. Chocolat renfermant un centre fluide, dans lequel une teneur en eau du centre est de 15 % en poids ou plus et 20 % en poids ou moins,
dans lequel le centre contient 30 % en poids ou plus et 40 % en poids ou moins de sorbitol et de glycérine au total, et
dans lequel le rapport du sorbitol sur la glycérine est de 4:1 à 1:4 sur une base de poids.

2. Chocolat selon la revendication 1, dans lequel le centre contient 0,5 % en poids ou plus et 9 % en poids ou moins d'éthanol.

3. Chocolat selon la revendication 1 ou 2, dans lequel le centre est un chocolat contenant de l'eau.

4. Chocolat selon l'une quelconque des revendications 1 à 3, dans lequel l'activité de l'eau du centre est de moins de 0,63.
